Europäisches Patentamt

European Patent Office

Office européen des brevets

(19)

(11) Publication number: **0 004 724**
**B1**

## EUROPEAN PATENT SPECIFICATION

(12)

(45) Date of publication of patent specification: **28.10.81**

(21) Application number: **79300443.3**

(22) Date of filing: **21.03.79**

(51) Int. Cl.³: **B 01 D 17/02**, C 02 F 1/40,
C 10 G 33/06

(54) Coalescing method and apparatus and purified products obtained therewith.

(30) Priority: **05.04.78 GB 1323178**

(43) Date of publication of application:
**17.10.79 Bulletin 79/21**

(45) Publication of the grant of the European patent:
**28.10.81 Bulletin 81/43**

(84) Designated Contracting States:
**BE DE FR GB NL SE**

(56) References cited:
**DE - A - 1 905 536**
**FR - A - 1 083 869**
**FR - A - 1 405 867**
**FR - A - 2 255 935**
**GB - A - 1 280 066**
**GB - A - 1 384 172**
**US - A - 1 833 315**
**US - A - 2 649 964**

(73) Proprietor: **The British Petroleum Company
Limited
Britannic House Moor Lane
London EC2Y 9BU (GB)**

(72) Inventor: **Martin, David Eric
The British Petroleum Company Ltd. Chertsey
Road
Sunbury-on-Thames, Middlesex, TW16 7LN (GB)**

(74) Representative: **MacLeod, Malcolm et al,
BP INTERNATIONAL LIMITED Patents and
Licensing Division Chertsey Road
Sunbury-on-Thames, Middlesex, TW16 7LN (GB)**

Courier Press, Leamington Spa, England.

# 0 004 724

Coalescing method and apparatus and purified products obtained therewith

This invention relates to apparatus and a method for removing contaminants from a liquid. The contaminants may be solid particles and/or a second liquid immiscible with but finely dispersed in the first liquid.

In operations in which large quantities of oil contaminated water are produced as effluent, e.g. oil refining and washing ships' tanks, the feed water is frequently taken from nearby sources, e.g. the sea or a river. After use of the water, the effluent is returned ultimately to a natural source. Before returning effluent directly to a source, or indirectly via a sewage system, contaminating oil must be removed.

The converse problem also exists, e.g. the removal of contaminating water from oil. In the production of crude oil from an oilfield it is usual for the oil initially produced to be substantially free from water. However, during the life of the oilfield the proportion of water produced with the crude oil usually increases and a point is reached when it may be desirable to separate the oil from the produced water before transporting the oil from the wellhead either by pipeline or tanker.

In both cases, solid particles are usually present together with the contaminated liquid.

Several devices for dealing with either or both problems are known, but coalescing cartridges having rigid elements have, in general, proved to be the most popular. These, however, suffer from certain disadvantages. The element, frequently a glass fibre element, acts both as a coalescing medium and as a filter. The filtration effect means that the cartridge eventually becomes blocked by the suspended solids removed from the stream under treatment. When this happens, the cartridge must be discarded. This is undesirable, partly because of the cost of the cartridges, but even more so on offshore platforms because of the supply, storage and disposal problems entailed.

Processes have been disclosed utilising fibres for either or both filtration and coalescence, but such filters operate with the fibres in linear or radial relationships to one another, which limits the opportunity for contact between the liquids passing through the filters and/or coalescers and the fibres.

We have now devised equipment which is suitable for improving the quality of either water contaminated with oil or oil contaminated with water, which is compact and easily regenerable by back washing and which gives improved contact between liquid and fibres.

Thus, according to the present invention there is provided a coalescer cartridge for removing contaminants from a liquid, which cartridge comprises a fixed first end support plate, a movable second end support plate movable relative to the first plate and connected to an actuating rod, and a plurality of fibres or bundles of fibres, each fibre or bundle being secured at one end to the first end support plate and at its other end to the second end support plate characterised by the fact that the movable second end support plate is axially movable by the actuating rod towards and away from the fixed first end support plate to compress and stretch the fibres respectively.

In use, the end plates are positioned close to one another by movement of the rod so that the fibres are compressed together to form a fine network in which the linearity of the fibres is lost. The fibres form a network of irregular channels and apertures, which provide greater opportunities for contact than devices of the prior art and hence for coalescence.

Suitable fibre materials for use in the present invention include natural and synthetic products such as wool, cotton, viscose, polyamides, polyesters, polyolefins and minerals.

In general, fibre diameters are in the range 1—1,000 micron and the fibres are preferably made into bundles up to 30 mm in diameter.

The cartridge preferably has a length in the range 1 mm to 1 m in the compressed state and a length 10 mm to 10 m in the stretched state.

The cartridge preferably has a length to diameter ratio in the range 1,000:1 to 1:1 in the compressed state.

By "length" in the above context is meant the distance between the end plates.

The cartridge is conveniently utilised in equipment comprising a container having an inlet and an outlet, the cartridge being interposed between them.

Preferably a settling zone is provided downstream of the coalescer cartridge to allow the coalesced droplets of the previously dispersed phase to settle.

Preferably there are two outlets from the settling zone so that separate liquid streams can be discharged.

According to another aspect of the present invention there is provided a method for coalescing one immiscible liquid finely dispersed in another and recovering separated liquids which method comprises passing a feedstock mixture of the liquids through coalescing equipment comprising a coalescer cartridge which comprises a fixed first end support plate, a movable second end support plate movable relative to the first plate and connected to an actuating rod, and a plurality of fibres or bundles of fibres, each fibre or bundle being secured at one end to the first end support plate and at its other end to the second end support plate, characterised by the fact that the movable second end support plate is axially moved by the actuating rod towards the fixed first end support plate to compress the fibres and the feedstock is passed through the fibres in the compressed state.

The method of the invention is particularly suitable for removing crude petroleum and petroleum

2

products from tanker washings and refinery effluent. Normally these contain from 5 to 750 mg of crude petroleum or petroleum products per kg of water. In general, the amount of suspended solids is very variable, however, typical effluents contain 10 to 500 ppm of suspended solids.

If solid suspended material is present, this is trapped in the cartridge and does not interfere with the coalescence of the liquids.

By the altering the material of the fibre and the extent of compression of the cartridge, the degree of filtration can be regulated.

In the following discussion of the mechanism of coalescence, a dispersion of traces of oil in water is considered as a typical feedstock for treatment. However, the invention is also applicable to the coalescence of droplets of water dispersed in oil.

The flow rate of the contaminated water should be related to the fibre diameter in the beds, the cross-sectional area of the beds and the extent of compression of the fibres, so that some turbulence is created in the liquid as it flows through the cartridge but not sufficient turbulence to prevent the deposition of a film of oil on the fibres nor to strip a deposited film off. This favours the movement of oil droplets across the stream lines in the winding passages in the network of the cartridge so that they will collide with the oil film on the fibres and with each other.

Droplets colliding with the oil film trap oil which can be collected. Colliding with each other leads to growth in the size of droplets. If the water velocity is too great, however, the resulting increased turbulence strips the oil film from the fibres and breaks up oil droplets, thereby reversing the above effects.

Optimum flow rates can be chosen for given cartridge dimensions and fibre diameters in the cartridge. In general, the hydraulic loading of liquid flowing through the equipment is in the range 15—150 $m^3/m^2/h$.

In use, as stated previously, the cartridge is operated with the fibres compressed. After an extended period of operation the cartridge may become blocked with solids and/or liquid causing an unacceptably high pressure drop and reducing the efficiency of coalescence. The cartridge is then easily regenerated by causing relative motion between the end plates to stretch the fibres, and open up the network to a series of relatively wide channels. The contaminants are then removed by flushing with wash liquid to wash them off.

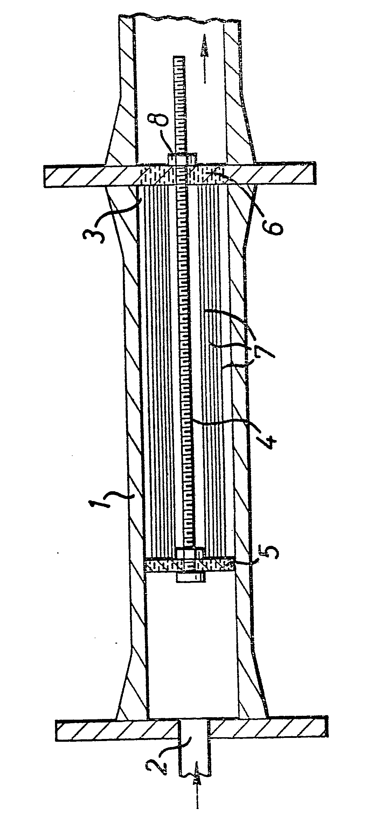

The invention is illustrated with reference to the accompanying drawing and examples.

The drawing is a diagrammatic representation of a coalescer according to the present invention with the fibres of the cartridge in the stretched condition.

A chamber 1 is fitted with an inlet 2 and an outlet 3. Within the chamber a cartridge coalescer comprises a threaded rod 4 to which is fixed a perforated end plate 5. At its other end the rod 4 passes freely through a second perforated end plate 6 fixed in position relative to the chamber 1. Fibres 7 are shown stretched between the end plates 5 and 6. A nut 8 is threaded on to the rod 4 and bears against the end plate 6.

In use, the nut 8 is tightened to withdraw the rod and move the end plate 5 closer to the end plate 6 to compress the fibres 7 to the desired extent.

Water contaminated with finely dispersed oil enters the chamber 1 through inlet 2 and passes through the perforations in end plate 5 into the network of fibres 7 where coalescence takes place. Larger droplets of oil and water pass out of the chamber through the perforations in end plate 6 and flow to a settling zone (not shown) where the oil and water form separate layers.

## Examples
### Coalescer A (as described with references to the drawing)

| | |
|---|---|
| Material | : Nylon baby wool |
| Amount | : 51 double strands, 230 mm long extended |
| Bed diameter | : 40 mm |
| Bed cross-sectional area | : 0.00114 $m^2$ |
| Separator volume | : 5 litres |
| Oil dispersion | : Forties crude in tapwater, dispersed by centrifugal pump |

## EXAMPLE 1

### Bed compressed to 30 mm

| Hours on Stream | Hydraulic Loading m³/m²/h | Separator Residence Time min | Oil Content In mg/litre | Oil Content Out mg/litre | Oil Removal Efficiency % |
|---|---|---|---|---|---|
| 2¾ | 27 | 10 | 230 | 3 | 99 |
| 3¾ | 58 | 4.7 | 110 | 4 | 96 |
| 4¾ | 84 | 3.2 | 170 | 18 | 89 |
| 14¾ | 55 | 4.8 | 743 | 9 | 99 |

After 14.75 h, the pressure drop across the bed had risen to 3.8 bar at a hydraulic loading of 55 m³/m²/h. The run was therefore terminated. This run demonstrates that the device is an effective coalescer.

### Example 2

The bed used was the same as in example 1. Before the run the bed was expanded and ca 5 litres of water passed through in the normal flow direction to flush out oil and solids collected in the bed. It was then compressed to a depth of 35 mm.

| Hours on Stream | ΔP bars | Hydraulic Loading m³/m²/h | Separator Residence Time min | Oil Content In mg/litre | Oil Content Out mg/litre | Oil Removal Efficiency % |
|---|---|---|---|---|---|---|
| 1 | 1.4 | 53 | 5 | 455 | 9 | 98 |
| 2¼ | 2.0 | 79 | 3.3 | 355 | 11 | 97 |
| 4¾ | 2.4 | 105 | 2.5 | 260 | 19 | 93 |
| 6 | 2.5 | 132 | 2 | 209 | 36 | 83 |

The performance of the coalescer deteriorates somewhat at high hydraulic loadings.

### Example 3

The bed used was that in Example 2, expanded, washed through and recompressed to 25 mm depth.

For this run, water was passed at a hydraulic loading of 27 m³/m²/h. A solution of oxalic acid was metered in upstream at a rate which gave a concentration of 50 mg/litre in the main water flow. This reacted with the natural calcium in the water to give a precipitate of calcium oxalate. This precipitate was removed by the bed to give a clear effluent stream. The pressure drop across the bed rose to 3.6 bar after 1 hour.

This run demonstrates that the device is an effective filter unit.

### Example 4

The bed for this run was that from Example 3, expanded, flushed through and compressed to 25 mm depth. The initial pressure drop was 0.8 bar. This indicates that washing in the expanded state serves to remove solids from the bed. The test procedure was the same as in Example 3 except that oil was also added at the rate of 370 mg/litre. The filtrate was again clear, and the oil content of the effluent was only 2 mg/litre.

This run indicates that the unit can be operated as a combined filter and coalescer, and will coalesce oil in the presence of solids.

*Coalescer B* (larger version of Coalescer A)

| | |
|---|---|
| Material | : Wool (double knitting) |
| Amount | : 288 quadruple strands— 265 mm long extended |
| Bed diameter | : 75 mm |
| Bed cross sectional area | : 0.00427 m² |
| Separator volume | : 10.5 litres |

### Example 5

The device was tested on a refinery effluent product in a kerosine washing plant. The effluent was acidic with a pH of 2.

The unit operated for 20 hours at a hydraulic loading of 45 m³/m²/h in which time the pressure drop rose from 0.4 to 0.9 bar, as shown in the following Table.

Influent oil concentration varied between 220 and 2,180 mg/litre with an average at 1,330 mg/litre.

The water stream from the coalescer unit ranged from 9 to 23 mg/litre with an average of 15 mg/litre.

This gives an oil removal efficiency of 99 per cent.

Of this oil, ca 8 ppm was soluble—accounting for the free oil in the effluent ranging from 1 to 15 mg/litre with an average of 7 mg/litre, or a free oil removal efficiency of 99.5 per cent.

This run demonstrates that the device will function satisfactorily on plant effluent.

| Hours on Stream | Bed Depth mm | Δ P bars | Oil Content mg/litre | | Oil Removal Efficiency % |
|---|---|---|---|---|---|
| | | | In | Out | |
| 0 | 265 | 0.4 | | | |
| 1 | 265 | 0.4 | 220 | 16 | 93 |
| 1¼ | 103 | 0.7 | | | |
| 2 | | 0.7 | 160 | 13 | 92 |
| 4 | | 0.7 | 465 | 9 | 98 |
| 20 | | 0.9 | 2180 | 23 | 99 |

### Example 6

Coalescer B was again tested using oil contaminated with water from a separation rig.

Over a range of water/oil compositions and flow rates, the coalescer consistently produced a treated oil stream containing less than 1% water, in most cases less than 0.5%, as can be seen from the results tabulated below. Small doses of sludge and sand were injected into the coalescer inlet and had little obvious effect. On stripping down the unit at the end of the run it was obvious that the sand had not penetrated into the bed, and could easily have been removed by backflushing.

**0 004 724**

| Bed Compression | Hours on Stream | Hydraulic Loading m³/m²/h | Δ P bars | Water Content % wt | | Water Removal Efficiency % |
|---|---|---|---|---|---|---|
| | | | | In | Out | |
| Loose packed | ¼ | 26.0 | 2.10 | 25 | 0.1 | 99.7 |
| | 2¼ | 22.5 | 2.38 | 28 | 0.04 | 99.9 |
| Tightest possible | 3¼ | 8.4 | 2.87 | 35 | 0.14 | 99.7 |
| relaxed by 25 mm | 5¼ | 21.3 | 2.87 | 36 | 0.45 | 99.2 |
| | 8 | 17.1 | 3.08 | 36 | 0.37 | 99.3 |
| | 11¼ | 17.1 | 3.15 | 20 | 0.28 | 98.9 |
| | 14½ | 11.3 | 3.43 | 27 | 0.16 | 99.6 |
| | 16 | 21.3 | 3.29 | 26 | 0.13 | 99.6 |
| | 16½ | 50 ml sludge added to inlet | | | | |
| | 17½ | 12.2 | 2.59 | 19 | 1.0 | 95.3 |
| | 21¼ | 15.9 | 2.94 | 26 | 0.7 | 97.7 |
| | 21½ | 300 g sand added to inlet | | | | |
| | 22 | 15.9 | 2.94 | 19 | 0.5 | 97.9 |

**Claims**

1. A coalescer cartridge for removing contaminants from a liquid, which cartridge comprises a fixed first end support plate, a movable second end support plate movable relative to the first plate and connected to an actuating rod, and a plurality of fibres or bundles of fibres, each fibre or bundle being secured at one end to the first end support plate and at its other end to the second end support plate characterised by the fact that the movable second end support plate is axially movable by the actuating rod towards and away from the fixed first end support plate to compress and stretch the fibres respectively.

2. A coalescer cartridge according to claim 1 wherein the fibres are made from wool, cotton, viscose, polyamide, polyester, polyolefin or a mineral.

3. A coalescer cartridge according to either of the preceding claims wherein the fibre diameters are in the range 1 to 1,000 micron.

4. A coalescer cartridge according to claim 3 wherein the fibres are made into bundles up to 30 mm in diameter.

5. A coalescer cartridge according to any of the preceding claims wherein the cartridge has a length in the range 1 mm to 1 m in the compressed state and a length in the range 10 mm to 10 m in the stretched state.

6. A coalescer cartridge according to any of the preceding claims wherein the cartridge has a length to diameter ratio in the range 1,000:1 to 1:1 in the compressed state.

7. A method for coalescing one immiscible liquid finely dispersed in another and recovering separated liquids which method comprises passing a feedstock mixture of the liquids which through coalescing equipment comprising a coalescer cartridge which comprises a fixed first end support plate, a movable second end support plate movable relative to the first plate and connected to an actuating rod, and a plurality of fibres or bundles of fibres, each fibre or bundle being secured at one end to the first end support plate and at its other end to the second end support plate characterised by the fact that the movable second end support plate is axially moved by the actuating rod towards the fixed first end support plate to compress the fibres and the feedstock is passed through the fibres in the compressed state.

8. A method according to claim 7 wherein the feedstock is a mixture of oil dispersed in water.

6

**0 004 724**

9. A method according to claim 7 wherein the feedstock is a mixture of water dispersed in oil.

10. A method according to any of claims 7 to 9 wherein the hydraulic loading of liquid flowing through the equipment is in the range 15 to 150 m³/m²/h.

11. A method according to any of claims 7 to 10 wherein the coalescer cartridge is periodically regenerated by discontinuing the flow of feedstock mixture, causing relative motion between the end support plates to stretch the fibres and flushing the stretched fibres with a wash liquid to remove retained contaminants.

## Revendications

1. Cartouche de coalescence pour débarrasser un liquide d'agents de contamination, cartouche qui comprend une première plaque de support terminale fixe, une seconde plaque terminale de support mobile qui peut se déplacer par rapport à la première plaque et est reliée à une tige d'actionnement, et une série de fibres ou faisceaux de fibres, chaque fibre ou faisceau étant fixé par une extrémité à la première plaque terminale de support et, par son autre extrémité, à la seconde plaque terminale de support, cette cartouche étant caractérisée en ce que la seconde plaque terminale mobile de support peut se mouvoir axialement sous l'action de la tige d'actionnement vers et depuis la première plaque terminale fixe de support pour respectivement comprimer et étirer les fibres.

2. Cartouche selon la revendication 1, dans lequelle les fibres sont fabriquées en laine, coton, viscose, polyamide, polyester, polyoléfine ou une matière minérale.

3. Cartouche selon l'une des revendications précédentes dans laquelle les diamtères des fibres sont compris entre 1 et 1000 microns.

4. Cartouche selon la revendication 3, dans laquelle les fibres forment des faisceaux ayant jusqu'à 30 mm de diamètre.

5. Cartouche selon l'une des revendications précédentes dans laquelle la cartouche présente une longueur comprise entre 1 mm et 1 mètre à l état comprimé et de 10 mm à 10 mètres à l'état étiré.

6. Cartouche selon l'une des revendications précédentes dans laquelle le rapport de la longueur au diamètre de la cartouche à l'état comprimé est compris entre 1000:1 et 1:1.

7. Procédé de coalescence d'un liquide non miscible finement dispersé dans un autre liquide et de récuperation des liquides séparés, qui consiste à faire passer un mélange des liquides par un appareil de coalescence comprenant une cartouche de coalescence comportant une première plaque terminale fixe de support, une seconde plaque terminale mobile de support qui peut être déplacée par rapport à la première plaque et est reliée à une tige d'actionnement, et une série de fibres ou faisceaux de fibres, chaque fibre ou faisceau étant fixé par une extrémité à la première plaque terminale de support et, par sa seconde extrémité, à la seconde plaque terminale de support, caractérisé en ce qu'on déplace axialement la seconde plaque mobile terminale de support par la tige d'actionnement vers la première plaque terminale fixe de support pour comprimer les fibres et on fait passer le mélange d'alimentation à travers les fibres à l'état comprimé.

8. Procédé selon la revendication 7, dans lequel la charge initiale est un mélange d'huile dispersée dans l'eau.

9. Procédé selon la revendication 7, dans lequel la charge est une mélange d'eau dispersée dans l'huile.

10. Procédé selon l'une des revendications 7 à 9, dans lequel la charge hydraulique du liquide qui coule à travers l'installation est comprise entre 15 et 150 m³/m²/h.

11. Procédé selon l'une des revendications 7 à 10, dans lequel on régénère périodiquement la cartouche de coalescence en interrompant l'écoulement du mélange, en provoquant un mouvement relatif entre les plaques terminales de support pour étirer les fibres et en inondant les fibres étirées avec un liquide de lavage pour éliminer les agents de contamination retenus.

## Patentansprüche

1. Coalescer-Einsatz (Vorrichtung zur Tropfenbildung in disperser Phase) zur Entfernung von Verunreinigungen aus einer Flüssigkeit, bestehend aus einer ortsfesten Halteplatte am einen Ende, einer relative zu der ersten Platte beweglichen, mit einer Steuerstange verbundenen zweiten Halteplatte am anderen Ende une einer Vielzahl von Fasern oder Faserbündeln, die an einem Ende an der ersten und am anderen Ende an der zweiten Halteplatte befestigt sind, dadurch gekennzeichnet, daß die bewegliche zweite Halteplatte mit Hilfe der Steuerstange axial auf die erste, ortsfeste Halteplatte zu oder von dieser hinweg beweglich ist, wodurch die Fasern entsprechend zusammengedrückt oder gestreckt werden.

2. Coalescer-Einsatz nach Anspruch 1, dadurch gekennzeichnet, daß die Fasern aus Wolle, Baumwolle, Viskose, Polyamid, Polyester, Polyolefin oder einem Mineral hergestellt sind.

3. Coalescer-Einsatz nach Anspruch 1 oder 2, dadurch gekennzeichnet, daß die Faser-Durchmesser im Bereich von 1 $\mu$m bis 1000 $\mu$m liegen.

7

**0 004 724**

4. Coalescer-Einsatz nach Anspruch 3, dadurch gekennzeichnet, daß die Fasern in Bündeln von bis zu 30 mm Durchmesser zusammengefaßt werden.

5. Coalescer-Einsatz nach Anspruch 1 bis 4, dadurch gekennzeichnet, daß Einsatz im zusammengedrückten Zustand eine Länge von 1 mm bis 1 m und im gestreckten Zustand eine Länge von 10 mm bis 10 m besitzt.

6. Coalescer-Einsatz nach Anspruch 1 bis 5, dadurch gekennzeichnet, daß der Einsatz im zusammengedrückten Zustand ein Verhältnis Länge: Durchmesser im Bereich von 1000:1 bis 1:1 besitzt

7. Verfahren zur Coalescierung einer in einer anderen Flüssigkeit fein verteilten, mit dieser nicht mischbaren Flüssigkeit und zur Gewinnung der voneinander getrennten Flüssigkeiten, wobei die Ausgangsmischung der Flüssigkeiten durch eine Coalescier-Vorrichtung geschickt wird, die einen Coalescer-Einsatz enthält, der aus einer ortsfesten Halteplatte am einem Ende, einer relativ zu der ersten Platte beweglichen, mit einer Steuerstange verbundenen zweiten Halteplatte am anderen Ende und einer Vielzahl von Fasern oder Faserbündeln, deren eines Ende an der ersten und deren anderes Ende an der zweiten Halteplatte befestigt ist, besteht, dadurch gekennzeichnet, daß die bewegliche zweite Halteplatte mit Hilfe der Steuerstange axial auf die erste, ortsfeste Halteplatte zu bewegt wird, wodurch die Fasern zusammengedrückt werden, und daß die Ausgangsmischung durch die Fasern im zusammengedrückten Zustand hindurchgeschickt wird.

8. Verfahren nach Anspruch 7, dadurch gekennzeichnet, daß als Ausgangsmischung ein Gemisch von Wasser und in diesem fein verteiltem Öl eingesetzt wird.

9. Verfahren nach Anspruch 7, dadurch gekennzeichnet, daß als Ausgangsmischung ein Gemisch von Öl und in diesem fein verteiltem Wasser eingesetzt wird.

10. Verfahren nach Anspruch 7 bis 9, dadurch gekennzeichnet, daß der hydraulische Durchsatz der durch die Vorrichtung fließenden Flüssigkeit im Bereich von 15 bis 150 m³/m²/h liegt.

11. Verfahren nach Anspruch 7 bis 10, dadurch gekennzeichnet, daß der Coalescer-Einsatz dadurch periodisch regeneriert wird, daß der Durchfluß der Ausgangsmischung unterbrochen wird, eine Relativbewegung der Halteplatten zu einander bis zur Streckung der Fasern vorgenommen wird und die gestreckten Fasern zur Entfernung zurückgehaltener Verunreinigungen mit einer Waschflüssigkeit gespült werden.